# EUROPEAN PATENT APPLICATION

(11) **EP 2 280 181 A1**
(43) Date of publication of application: **02.02.2011**
(21) Application number: 10251302.5
(22) Date of filing: 22.07.2010
(51) Int. Cl.: F16C 33/10

(54) **Rotary shaft assembly**

(30) Priority: 30.07.2009 TW 098125692
(71) Applicant: Yen Sun Technology Corp., Renwu Township Kao hsiung 814 (TW)
(72) Inventor: Chen, Chien-Jung, Renwu Township Kaohsiung County 814 (TW); Cheng, Jui-Hung, Kaohsiung City 802 (TW); Lin, Chih-Ming, Renwu Township Kaohsiung County 814 (TW)
(74) Representative: Brereton, Paul Arthur

(57) **Abstract**

A rotary shaft assembly (2) includes: a rotary shaft (4) having an insertion end portion (41) that is disposed co-axially in a hollow base (3), and rotatable relative to the base (3); a bearing (5) sleeved on the insertion end portion (41) of the rotary shaft (4), and partitioning an inner receiving space (30) in the base (3) into a lower oil-storage portion (301) and an upper oil-flow portion (302); and a stirring member (9) mounted on one end (411) of the insertion end portion (41) and co-rotatble with the rotary shaft (4). When the rotary shaft (4) rotates, the stirring member (9) stirs lubricating oil (7) in the lower oil-storage portion (301) to urge flow of the lubricating oil (7) from the lower oil-storage portion (301) through a first oil passage unit in one of the base (3) and the bearing (5), through the upper oil-f low portion (302) and through a second oil passage unit between the bearing (5) and the insertion end portion (41) of the rotary shaft (4), and back into the lower oil-storage portion (301).

## Description

The invention relates to a rotary shaft, and more particularly to a rotary shaft assembly capable of being used with a motor.

Figure 1 illustrates a conventional fan motor disclosed in Taiwanese Patent Publication No. 371019, wherein a motor shaft 13 positioned rotatably in a self-lubricating bearing 12 that is disposed in an axial tube 11. The motor shaft 13 has an outer annular surface formed with a spiral groove 131. Since oil leaks out of the self-lubricating bearing 12 and flows downwardly through the spiral groove 131 to lubricate a frictional junction of the motor shaft 13 and the self-lubricating bearing 12, the motor shaft 13 can rotate smoothly, temporarily. However, the oil from the self-lubricating bearing 12 accumulates in a lower portion of the spiral groove 131 after a period of use, thereby resulting in an inferior lubricating effect.

Therefore, an object of the present invention is to provide a rotary shaft assembly that can ensure smooth rotation of a rotary shaft thereof.

According to the present invention, a rotary shaft assembly comprises:
a hollow base formed with an inner receiving space therein;
a rotary shaft having an insertion end portion that is mounted in the inner receiving space in the base and that is disposed co-axially in the base, the rotary shaft being rotatable relative to the base about a central axis of the base;
a bearing disposed co-axially in the base, and sleeved on the insertion end portion of the rotary shaft so that one end of the insertion end portion of the rotary shaft extends out of the bearing, the bearing partitioning the inner receiving space in the base into a lower oil-storage portion and an upper oil-flow portion;
lubricating oil filling the lower oil-storage portion of the inner receiving space in the base and submerging the end of the insertion end portion of the rotary shaft;
a first oil passage unit formed in one of the base and the bearing and in spatial communication with the lower oil-storage portion and the upper oil-flow portion of the inner receiving space in the base;
a second oil passage unit formed between the insertion end portion of the rotary shaft and the bearing, and in spatial communication with the lower oil-storage portion and the upper oil-flow portion of the inner receiving space in the base; and
a stirring member mounted on the end of the insertion end portion of the rotary shaft and co-rotatble with the rotary shaft.

When the rotary shaft rotates, the stirring member stirs the lubricating oil in the lower oil-storage portion of the inner receiving space in the base to urge flow of the lubricating oil from the lower oil-storage portion through the first oil passage unit, through the upper oil-flow portion and through the second oil passage unit, and back into the lower oil-storage portion.

Other features and advantages of the present invention will become apparent in the following detailed description of the preferred embodiments with reference to the accompanying drawings, of which:

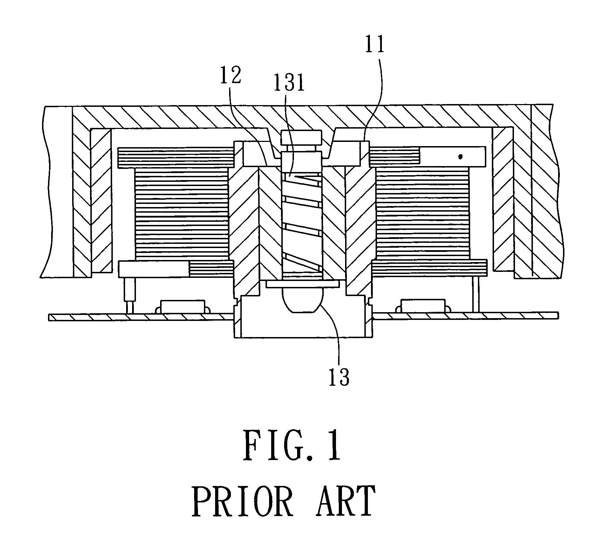

Figure 1 is a fragmentary, partly schematic sectional view of a conventional fan motor;
Figure 2 is a partly schematic sectional view showing the first preferred embodiment of a rotary shaft assembly according to the present invention;
Figure 3 is a partly schematic sectional view showing a variation of the first preferred embodiment;
Figure 4 is a partly schematic sectional view showing the second preferred embodiment of a rotary shaft assembly according to the present invention;
Figure 5 is a partly schematic sectional view showing the third preferred embodiment of a rotary shaft assembly according to the present invention;
Figure 6 is a partly schematic sectional view showing the fourth preferred embodiment of a rotary shaft assembly according to the present invention;
Figure 7 a partly schematic sectional view showing the fifth preferred embodiment of a rotary shaft assembly according to the present invention;
Figure 8 is a partly schematic sectional view showing a variation of the fifth preferred embodiment;
Figure 9 is a partly schematic sectional view showing the sixth preferred embodiment of a rotary shaft assembly according to the present invention;
Figure 10 is a partly schematic sectional view showing the seventh preferred embodiment of a rotary shaft assembly according to the present invention; and
Figure 11 is a partly schematic sectional view showing the eighth preferred embodiment of a rotary shaft assembly according to the present invention.

Before the present invention is described in greater detail, it should be noted that like elements are denoted by the same reference numerals throughout the disclosure.

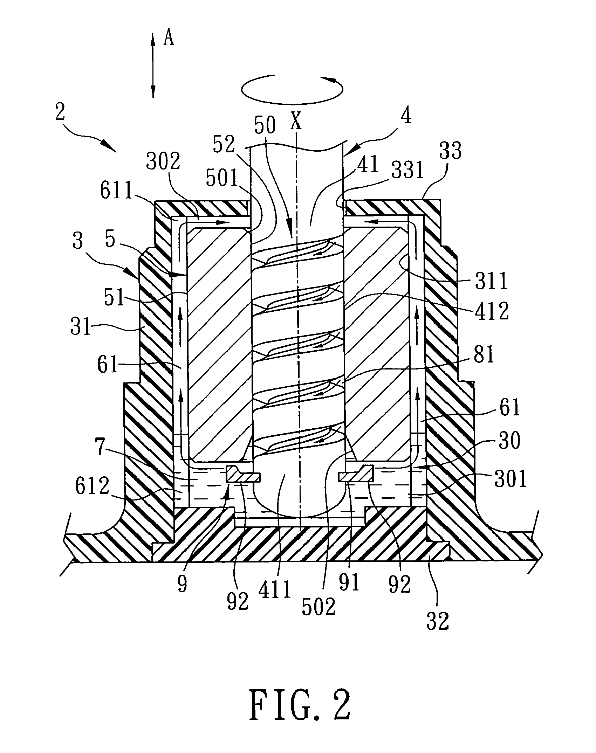

Referring to Figure 2, the first preferred embodiment of a rotary shaft assembly 2 according to the present invention is shown to include a hollow base 3, a rotary shaft 4, a bearing 5, lubricating oil 6, a first oil passage unit, a second oil passage unit, and a plurality of stirring members 9. The rotary shaft assembly 2 can be applied to a motor.

The base 3 can serve as a part of a stator of the motor. The base 3 is formed with an inner receiving space 30 therein. In this embodiment, the base 3 has a bottom wall 32, a top wall 33, and an annular surrounding wall 31 interconnecting the top and bottom walls 33, 32 and cooperating with the top and bottom walls 33, 32 to define the inner receiving space 30 thereamong. The top wall 33 is formed with a through hole 331. The surrounding wall 31 has an inner annular surface 311.

The rotary shaft 4 can serve as the motor shaft. The rotary shaft 4 has an insertion end portion 41 that is mounted in the inner receiving space 30 in the base 3 through the through hole 331 in the top wall 33 of the base 3 and that is disposed co-axially in the base 3. The rotary shaft 4 is rotatable relative to the base 3 about a central axis (X) of the base 3. The insertion end portion 41 has an outer annular surface 412.

The bearing 5 is disposed co-axially in the base 3, and is sleeved on the insertion end portion 41 of the rotary shaft 4 so that one end 411 of the insertion end portion 41 of the rotary shaft 4 extends out of the bearing 5. The bearing 5 partitions the inner receiving space 30 in the base 3 into a lower oil-storage portion 301 and an upper oil-flow portion 302. In this embodiment, the lower oil-storage portion 301 is defined among the bottom wall 32, the surrounding wall 31 and the bearing 5. The upper oil-flow portion 302 is defined among the top wall 33, the surrounding wall 31 and the bearing 5. The bearing 5 has an outer annular surface 51 abutting against the inner annular surface 311 of the surrounding wall 31 of the base 3, and an inner annular surface 52. The inner annular surface 52 defines a through hole 50 for extension of the insertion end portion 41 of the rotary shaft 4 therethrough. The through hole 50 has a gradually and upwardly widened upper end portion 501, and a gradually and downwardly widened lower end portion 502.

The lubricating oil 7 fills the lower oil-storage portion 301 of the inner receiving space 30 in the base 3, and submerges the end 411 of the insertion end portion 41 of the rotary shaft 4.

In this embodiment, the first oil passage unit includes a plurality of grooves 61 (only two are shown in Figure 2) formed in the inner annular surface 311 of the surrounding wall 31 of the base 3 and extending in a direction (A) parallel to the central axis (X). Each groove 61 has opposite upper and lower ends 611, 612 that are respectively in spatial communication with the upper oil-flow portion 302 and the lower oil-storage portion 301 of the inner receiving space 30.

The second oil passage unit is formed between the insertion end portion 41 of the rotary shaft 4 and the bearing 5. In this embodiment, the second oil passage unit includes a spiral groove 81 formed in the outer annular surface 412 of the insertion end portion 41 of the rotary shaft 4, and has opposite upper and lower ends (not shown) that are respectively in spatial communication with the upper oil-flow portion 302 and the lower oil-storage portion 301 of the inner receiving space 30 in the base 3.

The stirring member 9 is mounted on the end 411 of the insertion end portion 41 of the rotary shaft and is co-rotatable with the rotary shaft 4. In this embodiment, the stirring member 9 includes a connecting ring 91 sleeved fixedly on the end 411 of the insertion end portion 41 of the rotary shaft 4, and two opposite stirring blocks 92 extending outwardly and radially from an outer circumferential surface of the connecting ring 91.

When the rotary shaft 4 rotates, the stirring member 9 stirs the lubricating oil 7 in the lower oil-storage portion 301 of the inner receiving space 30 in the base 3 to urge flow of the lubricating oil from the lower oil-storage portion 301 through the first oil passage unit, through the upper oil-flow portion 302 and through the second oil passage unit, and back into the lower oil storage portion 30 (as indicated by the solid arrow lines in Figure 2). Therefore, the rotary shaft assembly 2 of the present invention can effectively lubricate a frictional junction of the bearing 5 and the insertion end portion 41 of the rotary shaft 4, thereby ensuring smooth rotation of the rotary shaft 4 and prolonging the service life of the bearing 5 and the rotary shaft 4.

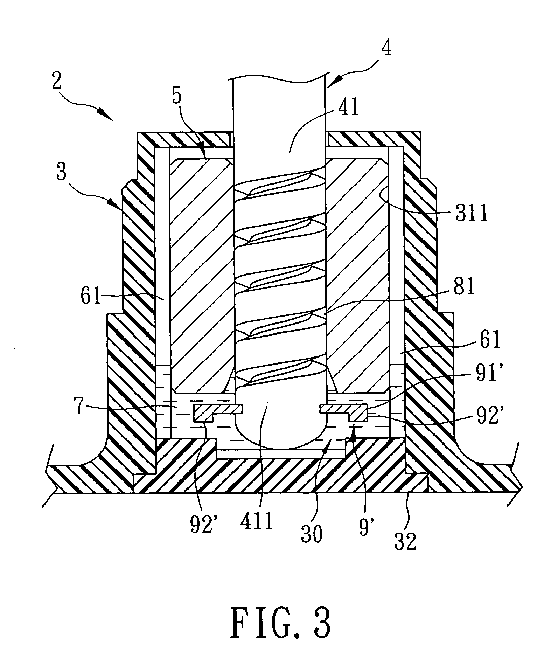

Figure 3 illustrates a variation of the first preferred embodiment, wherein the stirring member 9' includes a connecting disc 91' sleeved fixedly on the end 411 of the insertion end portion 41 of the rotary shaft 4, and a plurality of angularly equidistant stirring blocks 92' (only two are shown) projecting downwardly from a bottom surface of the connecting disc 91'.

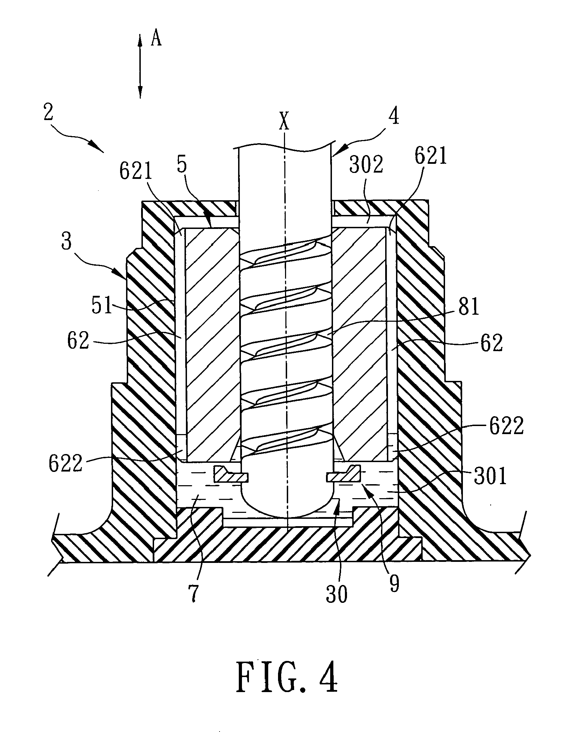

Figure 4 illustrates the second preferred embodiment of a rotary shaft assembly 2 according to this invention, which is a modification of the first preferred embodiment. Unlike the first preferred embodiment, the first oil passage unit includes a plurality of grooves 62 (only two are shown) formed in the outer annular surface 51 of the bearing 5 and extending in the direction (A). Each groove 62 has opposite upper and lower ends 621, 622 that are respectively in spatial communication with the upper oil-flow portion 302 and the lower oil-storage portion 301 of the inner receiving space 30.

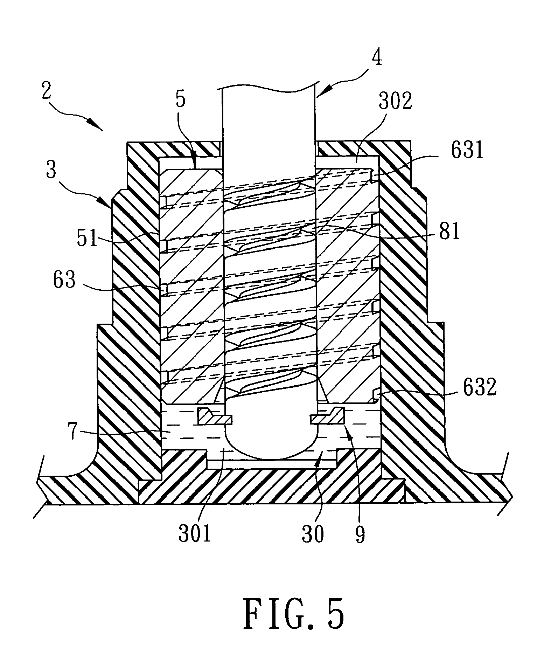

Figure 5 illustrates the third preferred embodiment of a rotary shaft assembly 2 according to this invention, which is amodification of the first preferred embodiment. Unlike the first preferred embodiment, the first oil passage unit includes a spiral groove 63 formed in the outer annular surface 51 of the bearing 5. The spiral groove 63 has opposite upper and lower ends 631, 632 that are respectively in spatial communication with the upper oil-flow portion 302 and the lower oil-storage portion 301 of the inner receiving space 30.

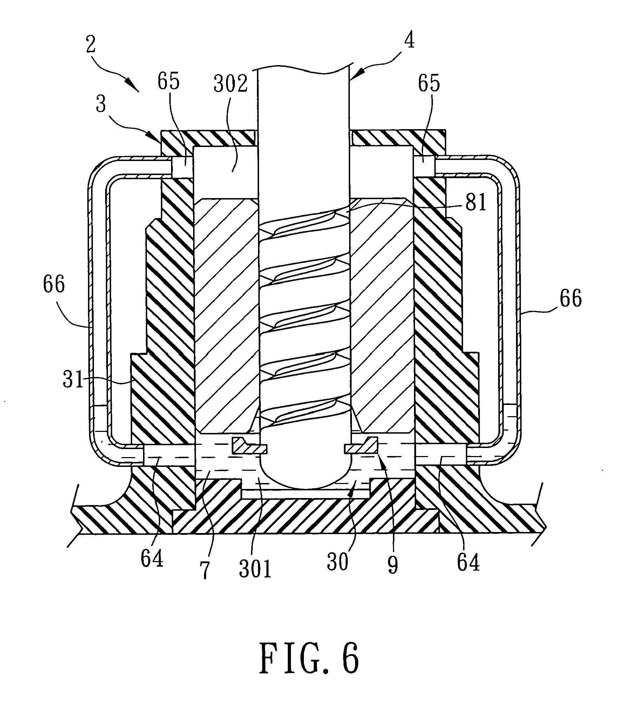

Figure 6 illustrates the fourth preferred embodiment of a rotary shaft assembly 2 according to this invention, which is a modification of the first preferred embodiment. Unlike the first preferred embodiment, the first oil passage unit includes a plurality of first through holes 64 (only two are shown) formed in the surrounding wall 31 of the base 3 and in spatial communication with the lower oil-storage portion 301 of the inner receiving space 30, a plurality of second through holes 65 (only two are shown) formed in the surrounding wall 31 of the base 3 and in spatial communication with the upper oil-flow portion 302 of the inner receiving space 30, and a plurality of conduits 66 (only two are shown). Each conduit 66 has opposite ends inserted respectively in a corresponding first through hole 64 and a corresponding second through hole 65 such that each conduit 66 is in spatial communication with the lower oil-storage portion 301 and the upper oil-flow portion 302 through the corresponding first through hole 64 and the corresponding second through hole 65.

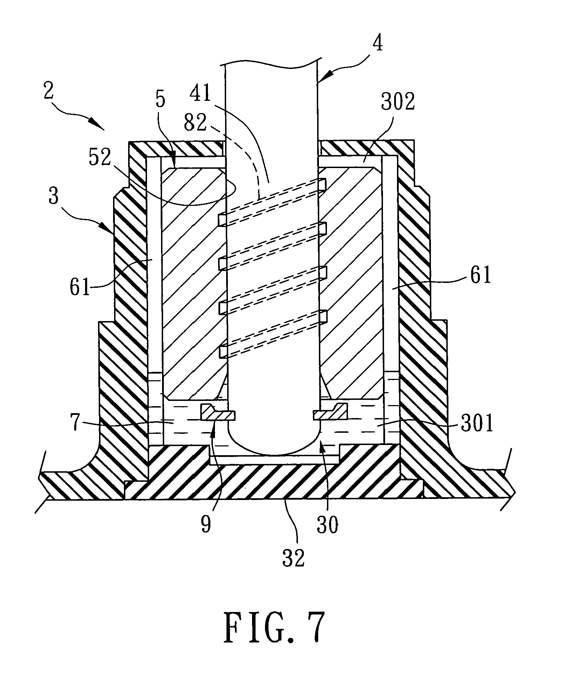

Figure 7 illustrates the fifth preferred embodiment of a rotary shaft assembly 2 according to this invention, which is amodificationof the first preferred embodiment. Unlike the first preferred embodiment, the second oil passage unit includes a spiral groove 82 formed in the inner annular surface 52 of the bearing 5. The spiral groove 82 has opposite upper and lower ends (not shown) that are respectively in spatial communication with the upper oil-flow portion 302 and the lower oil-storage portion 301 of the inner receiving space 30.

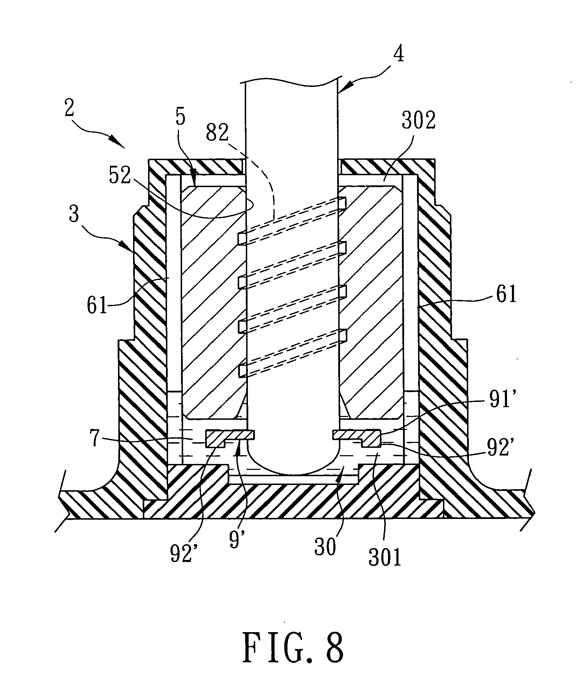

Figure 8 illustrates a variation of the fifth preferred embodiment, wherein the stirring member 9' has the same structure as that of the variation of the first preferred embodiment shown in Figure 3.

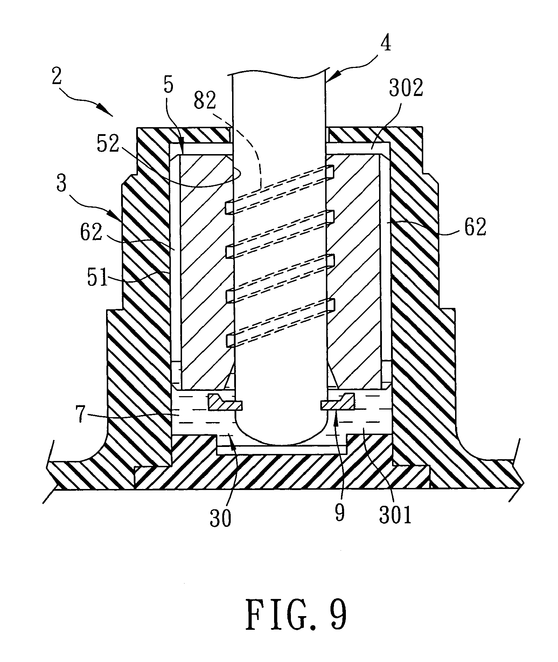

Figure 9 illustrates the sixth preferred embodiment of a rotary shaft assembly 2 according to this invention, which is a modification of the second preferred embodiment shown in Figure 4. Unlike the second preferred embodiment, the second oil passage unit includes a spiral groove 82 formed in the inner annular surface 52 of the bearing 5. The spiral groove 82 has opposite upper and lower ends (not shown) that are respectively in spatial communication with the upper oil-flow portion 302 and the lower oil-storage portion 301 of the inner receiving space 30.

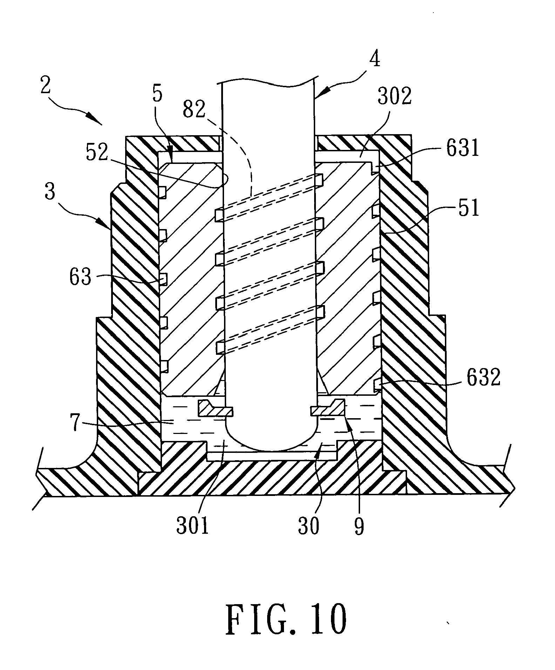

Figure 10 illustrates the seventh preferred embodiment of a rotary shaft assembly 2 according to this invention, which is a modification of the third preferred embodiment shown in Figure 5. Unlike the third preferred embodiment, the second oil passage unit includes a spiral groove 82 formed in the inner annular surface 52 of the bearing 5. The spiral groove 82 has opposite upper and lower ends (not shown) that are respectively in spatial communication with the upper oil-flow portion 302 and the lower oil-storage portion 301 of the inner receiving space 30.

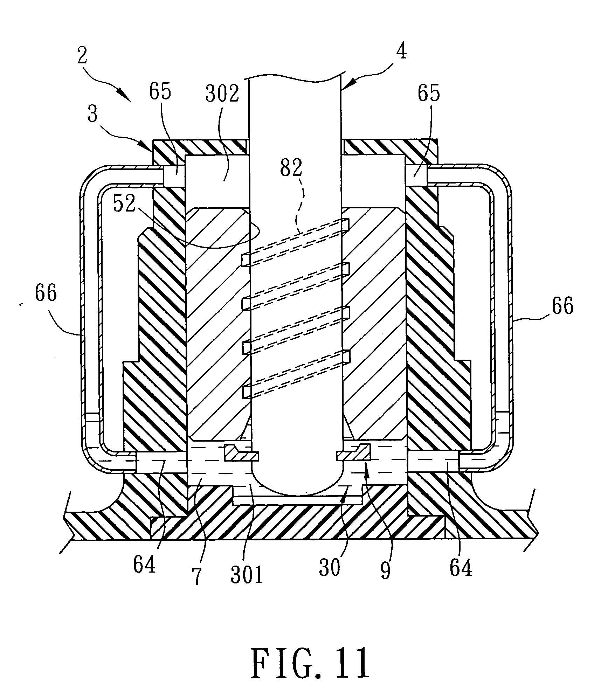

Figure 11 illustrates the eighth preferred embodiment of a rotary shaft assembly 2 according to this invention, which is a modification of the fourth preferred embodiment shown in Figure 6. Unlike the fourth preferred embodiment, the second oil passage unit includes a spiral groove 82 formed in the inner annular surface 52 of the bearing 5. The spiral groove 82 has opposite upper and lower ends (not shown) that are respectively in spatial communication with the upper oil-flow portion 302 and the lower oil-storage portion 301 of the inner receiving space 30.

## Claims

1. A rotary shaft assembly (2) **characterized by**:
a hollow base (3) formed with an inner receiving space (30) therein;
a rotary shaft (4) having an insertion end portion (41) that is mounted in said inner receiving space (30) in said base (3) and that is disposed co-axially in said base (3), said rotary shaft (4) being rotatable relative to said base (3) about a central axis (X) of said base (3);
a bearing (5) disposed co-axially in said base (3), and sleeved on said insertion end portion (41) of said rotary shaft (4) so that one end (411) of said insertion end portion (41) of said rotary shaft (4) extends out of said bearing (5), said bearing (5) partitioning said inner receiving space (30) in said base (3) into a lower oil-storage portion (301) and an upper oil-flow portion (302);
lubricating oil (7) filling said lower oil-storage portion (301) of said inner receiving space (30) in said base (3) and submerging said end (411) of said insertion end portion (41) of said rotary shaft (4);
a first oil passage unit formed in one of said base (3) and said bearing (5) and in spatial communication with said lower oil-storage portion (301) and said upper oil-flow portion (302) of said inner receiving space (30) in said base (3);
a second oil passage unit formed between said insertion end portion (41) of said rotary shaft (4) and said bearing (4), and in spatial communication with said lower oil-storage portion (301) and said upper oil-flow portion (302) of said inner receiving space (30) in said base (3); and
a stirring member (9, 9') mounted on said end (411) of said insertion end portion (41) of said rotary shaft (4) and co-rotatble with said rotary shaft (4);
wherein, when said rotary shaft (4) rotates, said stirring member (9, 9') stirs said lubricating oil (7) in said lower oil-storage portion (301) of said inner receiving space (30) in said base (3) to urge flow of said lubricating oil (7) from said lower oil-storage portion (301) through said first oil passage unit, through said upper oil-flow portion (302) and through said second oil passage unit, and back into said lower oil-storage portion (301).

2. The rotary shaft assembly (2) as claimed in Claim 1, **characterized in that**:
said base (3) has a bottom wall (32), a top wall (33), and an annular surrounding wall (31) interconnecting said top and bottom walls (33, 32) and cooperating with said top and bottom walls (33, 32) to define said inner receiving space (30) thereamong, saidtopwall (33) being formed with a through hole (331) permitting extension of said insertion end portion (41) of said rotary shaft (4) into said inner receiving space (30) in said base (3) therethrough, said lower oil-storage portion (301) being defined among said bottom wall (32), said surrounding wall (31) and said bearing (5), said upper oil-flow portion (302) being defined among said top wall (33), said surrounding wall (31) and said bearing (5), said surrounding wall (31) of said base (3) having an inner annular surface (311);
said insertion end portion (41) of said rotary shaft (4) has an annular outer surface (412); and
said bearing (5) has an outer annular surface (51) abutting against said inner annular surface (311) of said surrounding wall (31) of said base (3), and an inner annular surface (52).

3. The rotary shaft assembly (2) as claimed in Claim 2, further **characterized in that** said first oil passage unit includes at least one groove (61, 62) formed in one of said inner annular surface (311) of said surrounding wall (31) of said base (3) and said outer annular surface (51) of said bearing (5), extending in a direction (A) parallel to the central axis (X), and having opposite upper and lower ends (611, 621, 612, 622) that are respectively in spatial communication with said upper oil-flow portion (302) and said lower oil-storage portion (301) of said inner receiving space (30).

4. The rotary shaft assembly (2) as claimed in Claim 2, further **characterized in that** said first oil passage unit includes a spiral groove (63) formed in said outer annular surface (51) of said bearing (5) and having opposite upper and lower ends (631, 632) that are respectively in spatial communication with said upper oil-flow portion (302) and said lower oil-storage portion (301) of said inner receiving space (30).

5. The rotary shaft assembly (2) as claimed in Claim 2, further **characterized in that** said first oil passage unit includes:
at least one first through hole (64) formed in said surrounding wall (31) of said base (3) and in spatial communication with said lower oil-storage portion (301) of said inner receiving space (30);
at least one second through hole (54) formed in said surrounding wall (31) of said base (3) and in spatial communication with said upper oil-flow portion (302) of said inner receiving space (30); and
at least one conduit (66) having opposite ends inserted respectively into said first and second through holes (64, 65) in said surrounding wall (31) of said base (3) such that said conduit (6) is in spatial communication with said lower oil-storage portion (301) and said upper oil-flow portion (302) through said first and second through holes (64, 65) in said surrounding wall (31) of said base (3).

6. The rotary shaft assembly (2) as claimed in Claim 2, further **characterized in that** said second oil passage unit includes a spiral groove (81, 82) formed in one of said outer annular surface (412) of said insertion end portion (41) of said rotary shaft (4) and said inner annular surface (52) of said bearing (5), and having opposite upper and lower ends that are respectively in spatial communication with said upper oil-flow portion (302) and said lower oil-storage portion (301) of said inner receiving space (30).

7. The rotary shaft assembly (2) as claimed in Claim 2, further **characterized in that** said inner annular surface (52) of said bearing (5) defines a through hole (50) for extension of said insertion end portion (41) of said rotary shaft (4) therethrough, said through hole (50) having a gradually and upwardly widened upper end portion (501), and a gradually and downwardly widened lower end portion (502).

8. The rotary shaft assembly (2) as claimed in Claim 1, **characterized in that** said stirring member (9) includes a connecting ring (91) sleeved fixedly on said end (411) of said insertion end portion (41) of said rotary shaft (4), and at least one stirring block (92) extending outwardly and radially from an outer circumferential surface of said connecting ring (91).

9. The rotary shaft assembly (2) as claimed in Claim 1, **characterized in that** said stirring member (9') includes a connecting disc (91') sleeved fixedly on said end (411) of said insertion end portion (41) of said rotary shaft (4), and at least one stirring block (92') projecting downwardly from said connecting disc (91').
